# EUROPEAN PATENT SPECIFICATION

(11) **EP 0 869 053 B1**
(45) Date of publication and mention of the grant of the patent: **23.04.2003**
(21) Application number: 98109549.0
(22) Date of filing: 04.06.1992
(51) Int. Cl.: B62M 23/02

(54) **Muscle-operated vehicle**
Muskelgetriebenes Fahrzeug
Véhicule propulsé par la force musculaire

(30) Priority: 04.06.1991 JP 15942591; 04.06.1991 JP 15943091
(43) Date of publication of application: 07.10.1998
(62) Divisional of application: 92109478.5
(73) Proprietor: YAMAHA HATSUDOKI KABUSHIKI KAISHA, Iwata-shi Shizuoka-ken, 438 (JP)
(72) Inventor: Takata, Nozomu, Iwata-Shi, Shinzuoka-ken (JP)
(74) Representative: Grünecker, Kinkeldey, Stockmair & Schwanhäusser Anwaltssozietät

(56) References cited:
- FR-A- 2 259 741
- US-A- 3 921 741
- US-A- 4 221 275
- PATENT ABSTRACTS OF JAPAN vol. 014, no. 262 (M-0981), 6 June 1990 (1990-06-06) & JP 02 074491 A (MATSUSHITA ELECTRIC WORKS LTD), 14 March 1990 (1990-03-14)

## Description

The present invention relates to a muscle-operated vehicle, especially bicycle, having a muscle-operated driving system, an auxiliary electrical power driving system and a control means for controlling the output of the electrical power driving system.

A bicycle is well-known which, in parallel to each other is provided with a muscle-operated driving system for advancing the bicycle by treading upon the foot pedals and with an electrical motor operated driving system wherein it is possible to advance the bicycle through joint operation of both driving systems. Usually the output of the DC motor used in the electrical power driving system is ON-OFF controlled via a manual switch provided at the handle bar or is continuously controlled via a manual accelerator switch. Moreover, a system is well-known which detects the magnitude of the treading force inputted from the foot pedal and varies the driving force of the DC motor according to the increase or decrease of this treading force (Japanese unexamined patent publication (Hei 2-74491). I.e. the driving force of the electrical motor is controlled in correspondence to the increase or decrease of the detected muscular driving force which is detected from the input from the foot pedal and, when the muscular load is heavy, the driving force of the electric motor is increased to reduce the muscular load. For such types of bicycles, it is desirable that the driving systems be constructed such that the driving force of one driving system will not affect the other parallel driving system but be transmitted only to the drive wheel, usually the rear wheel of the vehicle. Therefore, it has been conceived to instal a one-way clutch in each of the muscle-operated and electrically powered driving systems as is indicated in Japanese unexamined patent application Sho 57-74285.

However, in this case the one-way clutches will be engaged also under operating conditions wherein the bicycle is pushed by walking of the operator. In that case, the one-way clutches will also be engaged when the bicycle is reversed by pushing it back manually and the DC motor and the crank pedals will be rotated backwardly. In such a case, the electrical motor functions as a generator when rotated in its reverse direction of rotation generating a large short-circuit current and causing a great braking force.

For example, when a permanent magnet type DC motor using a permanent magnet as a rotor or stator is rotated reversely, a reverse electrical voltage is generated with a polarity reverse to that of the voltage generated when rotated normally. Normally, in parallel to the motor coil, a fly-wheel diode is connected enabling the flow of an electric current caused by the inductance component while the motor current is intercepted. Thus, then a reverse electric voltage is generated by the reverse rotation of the motor, a large reverse current will make flow through the diode as a short-circuit current by this reverse electric voltage. Therefore, a great braking force will be generated and a great resistance force will be added when reversing the bicycle. This renders the handling of the bicycle inconvenient.

On the other hand, as the auxiliary electrical power driving system is frequently used and controlled to be only supplementary to the driving force generated by the cyclist, the electrical power driving system affects the handling of the bicycle when same is pushed manually by a person walking along, together with the bicycle pushing same. In this case, while walking along pushing the bicycle by hand, no driving force is normally generated by the DC motor as no treading force is generated from the pedal. On the other hand, as the bicycle is equipped with a battery and the DC motor (and some other drive means such as the one-way clutches), it becomes heavier than a conventional bicycle which renders a push-walking of the bicycle cumbersome.

Moreover, as the output of the electrical power driving system is normally only supplementary, there is no power assistance from said electrical driving system upon push-walking the bicycle e.g. when going up a steep slope when the rider must get off, pushing the bicycle by hand. Also in this case, as the bicycle is relatively heavy, considerable effort is required for walking while pushing the bicycle by hand.

In view of the drawbacks of the above mentioned conventional systems, it is an objective of the present invention to facilitate the handling of a vehicle of the type as indicated above, having a muscle-operated driving system and an electrical power driving system specifically, under conditions of manually moving the vehicle, specifically bicycle, pushing it forward by hand.

According to the present invention, this objective is solved for a muscle-operated vehicle as indicated above in that a push-walking detecting means is provided for detecting the condition of operating the vehicle by walking, pushing said vehicle in forward direction, especially bicycle, by hand, triggering the control means to control the electrical power driving system to a certain push-walking speed.

In this way, it becomes possible to push the bicycle with only a light muscular force utilizing the electrical power driving system specifically, the electric motor as a supplementary source of energy when walking along pushing the bicycle by hand. Thus, pushing a bicycle by hand, walking becomes very easy.

According to a preferred embodiment of the present invention, the push-walking detecting means comprises a driving torque comparator, a vehicle speed comparator, a grip switch and an AND circuit to activate the push-walking control means of the motor circuit to energize the electrical power driving system In response to a control means activating output of the AND circuit.

According to another embodiment of the present invention, a push-walking condition canceling switch is provided, operated in response to a braking condition of the vehicle being detected.

In order to enhance the support provided by the auxiliary electrical power driving system in case of pushing said vehicle along a slope, it is advantageous when the push-walking detecting means comprises a driving torque comparator, a vehicle speed comparator, an inclination angle sensor and an AND circuit to activate the push-walking control means of the motor circuit to energize the electrical power drive system in response to the control means activating output of the AND circuit.

In that case, it is preferred and advantageous when said AND circuit outputs a triggering signal when the muscular driving torque is zero, a detected vehicle speed is higher than a predetermined definite speed and when the detected inclination angle is higher than a predeterminable definite angle.

Other preferred embodiments of the present invention are laid out in the further sub-claims.

In the following, the present invention is explained in greater detail by a means of two embodiments thereof in conjunction with the associated drawings wherein:
Figure 1 is a conceptional illustration of a bicycle according to a first embodiment of the present invention,
Figure 2 is a diagram describing the functions of the embodiment as shown in Figure 1,
Figure 3 is a block diagram of the muscle-operated and electrical power driving systems of the embodiment of Figures 1 and 2,
Figure 4 is a conceptional illustration of another embodiment of the present invention performing the same purposes as the first embodiment of Figure 1,
Figure 5 is a diagram describing the functions of the second embodiment according to Figure 4,
Figure 6 is a conceptional illustration of a third embodiment of the present invention,
Figure 7 is a diagram describing the function of the third embodiment of Figure 6,
Figure 8 is a conceptional illustration of another embodiment performing the same objectives as the third embodiment of Figure 6 of the present invention,
Figure 9 is a diagram describing the function of said fourth embodiment of Figure 8.

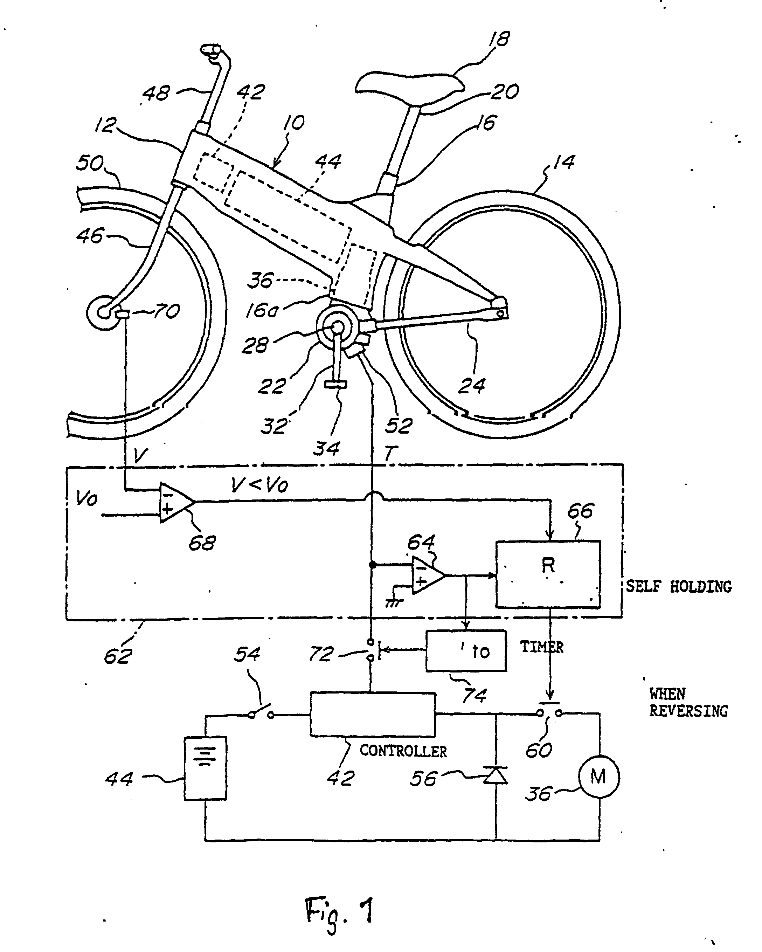

Figure 1 shows schematically an electric motored bicycle as a preferred embodiment of a vehicle having a muscle-operated driving system and an electrical power driving system in parallel thereto.

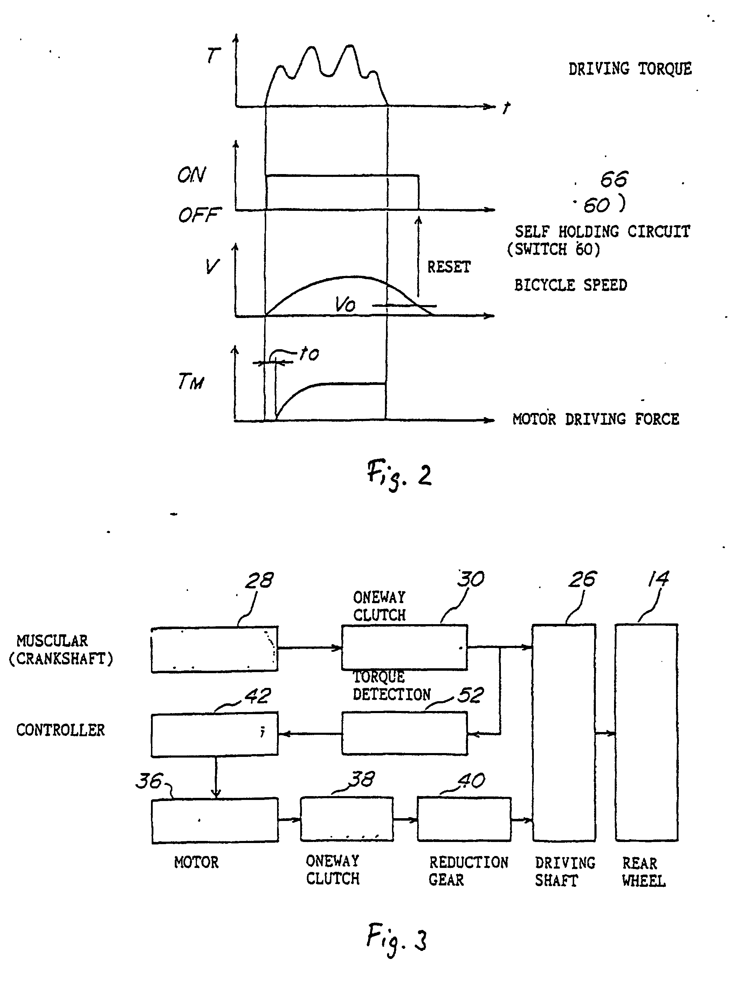

Fig.1 is a conceptional illustration of an embodiment of this invention, Fig.2 is its function describing diagram and Fig.3 is its power system diagram.

In Fig.1, the reference numeal 10 denotes a main frame extended from the head tube 12 aslant downward and rearward to reach the wheel shaft of the rear wheel 14. Near the middle of the main frame 10 is secured a seat tube 16. On the upper and lower portions of the seat tube 16 are installed a seat post 20 holding a saddle 18 and a bottom bracket 22, respectively.

The bottom bracket 22 is connected with the rear end of the main frame 10 through a pair of left and right rear stays 24. The right side rear stay (not shown) has a driving shaft 26 (Fig.3) inserted in it. and the rotation of the crankshaft 28 held by the botton bracket 22 is transmitted to the rear wheel 14 through a oneway clutch 30 (Fig.3) and the driving shaft 26. That is, a shaft-drive type muscle operated rear wheel driving system is constructed.

On both ends of the crankshaft 28 are fastened cranks 32 on each of which is mounted a foot pedal 34.

In the lower portion of the seat tube 16 is formed a cylindrical motor case 16a in which is accommodated an electric motor 36. The motor 36 is constituted of a brushless DC motor having, for example, a permanent magnet type rotor, the rotating shaft of this rotor is laid generally in parallel with the seat tube 16. The rotation of this rotor is transmitted to the drive shaft 26 and then to the rear wheel 14 through a oneway clutch 38 (Fig.3) and a reduction gearing 40 employing a planetary gear mechanism or the like. Consequently, a driving system operated by a muscular force inputted from the crankshaft 28 and another driving system operated by the motor 36 are provided in parallel to each other.

In Fig.1, the numerals 42 and 44 denote a controller and a chargeable battery, respectively, and these members are accommodated in the main frame 10. The numeral 46 denotes a front fork rotatably held by the head pipe 12, 48 denotes a steering handle bar, and 50 denotes a front wheel mounted on the front fork 46.

The driving force of the motor 36 is controlled according to the muscular driving force, that is, by the treading force on the pedal 34. For example, the driving systems can be of such a structure in which the driving torque T is detected by a torque detector 52 (Fig.3) having a structure for detecting the driving reaction force from in the planetary gear mechanism employed in the muscle operated driving system, and the controller 42 increases or decreases the current into the motor 36 according to the increase or decrease of this driving torque T.

In Fig.1, the numerals 54 and 56 denote a main switch connected between the battery 44 and the controller 42 and a flywheel diode, respectively. This diode 56 is employed to provide a flow path for the electric current (flywheel current) which continues to flow because of the inductance component of the motor 36 in case the controller 42 intercepted the motor current supplied from the battery 44.

Next are described the brake releasing switch 60 for preventing the motor 36 from generating the braking force and the reverse control circuit 62 for opening/closing this switch 60.

The switch 60 has a normally opened contact connected in the closed motor circuit composed of the motor 36 and the diode 56. The reverse control circuit 62 is provided with a driving torque comparator 64, a self-holding circuit 66 and a bicycle speed comparator 68. When the comparator 64 judged that the output (driving torque) T of the torque detector 52 fo detecting the treading force is applied, in other word, that T>0, it outputs an ON signal to the self holding circuit 66. The self holding circuit 66 closes the switch 60 on the basis of this ON signal, and holds this state until it is reset. That is, this state is maintained even if the treading force becomes 0 (T=0).

When the bicycle speed V detected by the bicycle speed sensor 70 installed on the fron wheel 50 becomes lower than a set value Vₒ (for example, lower than about 1 km/h), the comparator 68 resets the self holding circuit 66 and, therefore, the switch 60 is opened This self holding circuit 66 gives the ON signal of the driving torque comparator 64 priority over the reset signal of the bicycle speed comparator 68, and closes the switch 60 when the pedal 38 is treaded even in the state of the bicycle speed V lower than Vₒ. Therefore, this switch 60 is left opened while the bicycle is at rest and is being reversed, and, after the pedal 34 is treaded, is kept closed until the bicycle speed V becomes lower than Vₒ.

The controller 42 in this embodiment functions to start supplying a motor current with a delay of a definite time to after the switch 60 is closed. That is, while a driving torque T is inputted in the controller 42 through the normally opened contact 72, this contact 72 is closed by the output of a timer 74. The timer 74 closes the contact 72 with a delay of time to (about 0.1∼0.2 sec) after the ON signal of the comparator 64.

Therefore, the driving force T_{M} of the motor 36 is generated with a delay of the time to after the switch 60 is closed (See Fig.2).

According to this embodiment, while the bicycle is at rest or being reversed, since the driving torque T caused by the pedal 34 is zero, the switch 60 is left opened. When being reversed, although a reverse voltage having a polarity shown in Fig.1 is generated by the motor 36, no short-circuit current flows because no closed circuit is formed. That is, no braking force is generated, and the bicycle can be easily pushed backward.

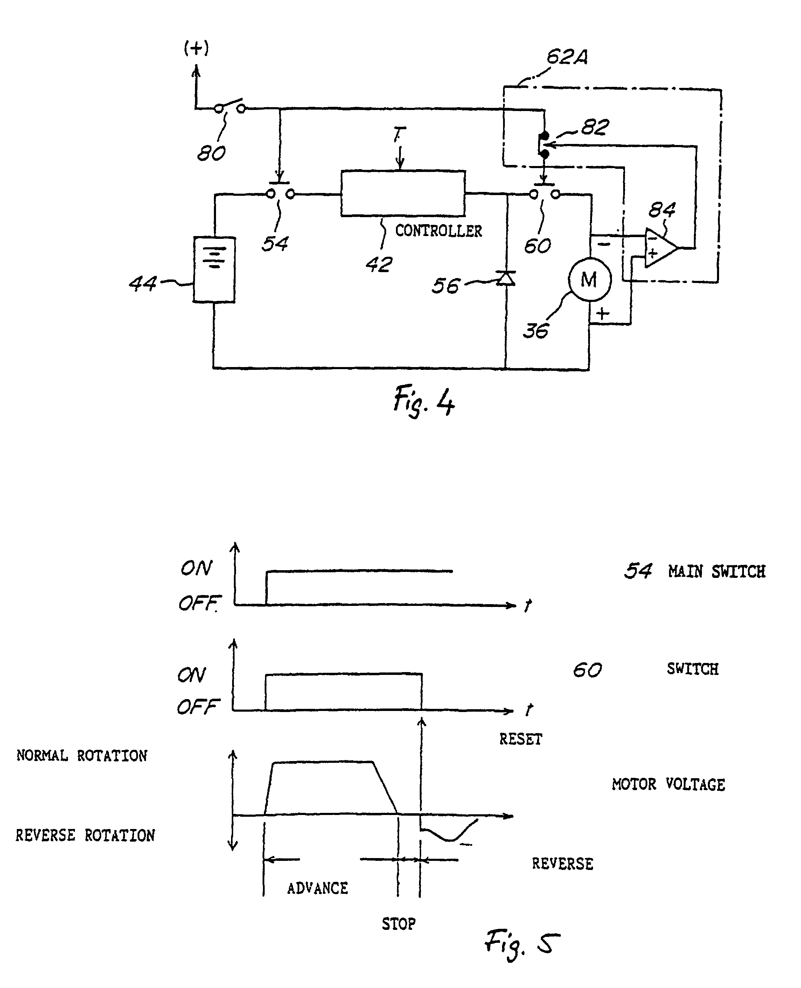

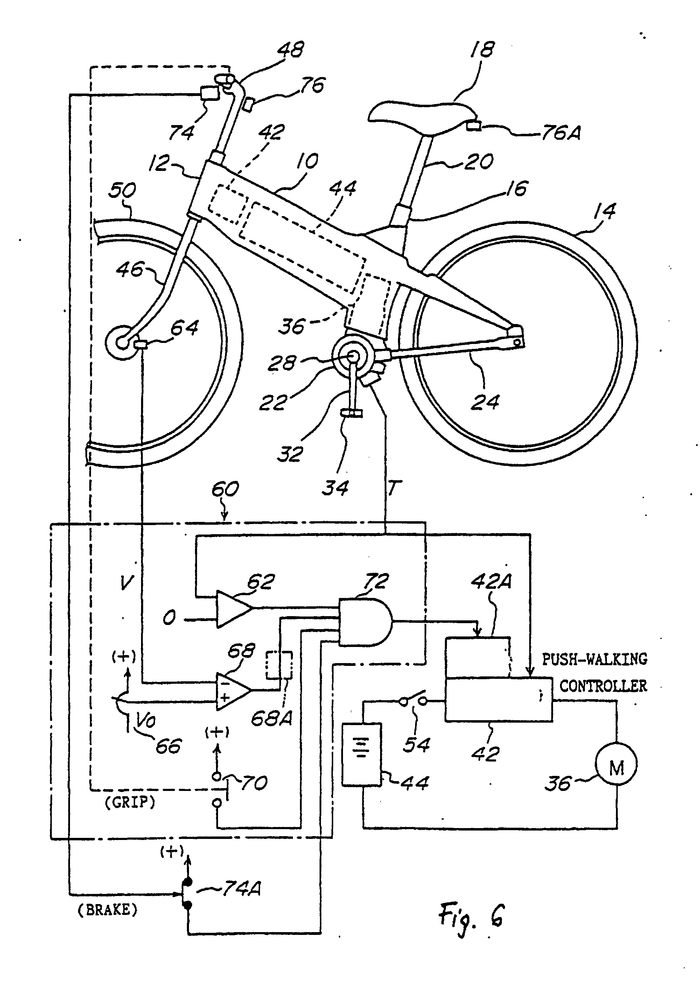

Fig.4 is a conceptional illustration of another embodiment, and Fig.5 is its function describing diagram. The reverse control circuit 62A of this embodiment has a structure in which, while the main switch 54 is opened/closed by a key switch 80, the switch 60 for reverse brake releasing is opened by a current flowing through this key switch 80 and a normally closed contact 82, and this normally closed contact 82 is opened by the output of a comparator 84 for detecting the reverse rotation of the motor 36. That is, since the polarity of the reverse voltage generated by the motor 36 while being rotated reversely (while the bicycle is being reversed) becomes as shown in Fig.4 and is reverse to that of the voltage generated while being rotated normally (while the bicycle is being advanced), this polarity is detected by the comparator 84 and the normally closed contact 82 is opened. Consequently, the switch 60 is opened and the short-circuit current caused by the reverse voltage of the motor 36 is prevented from flowing.

The motor 36 to be used in this invention is not limited to that employing a permanent magnet type stator, but is only required to be a DC motor having a characteristic that the polarity of the reverse voltage generated when rotated reversely is reverse to that of the voltage generated when rotated normally, as is the case with a motor employing a permanent magnet type rotor.

Various methods such as the chopper method, voltage switching method, etc., can be employed as the control method of the controller 42. Further, this invention can be applied not only to bicycles but also to cycles having three or more wheels. This invention can be applied to cycles having its motor and driving wheel directly connected with each other with no oneway clutch provided therebetween.

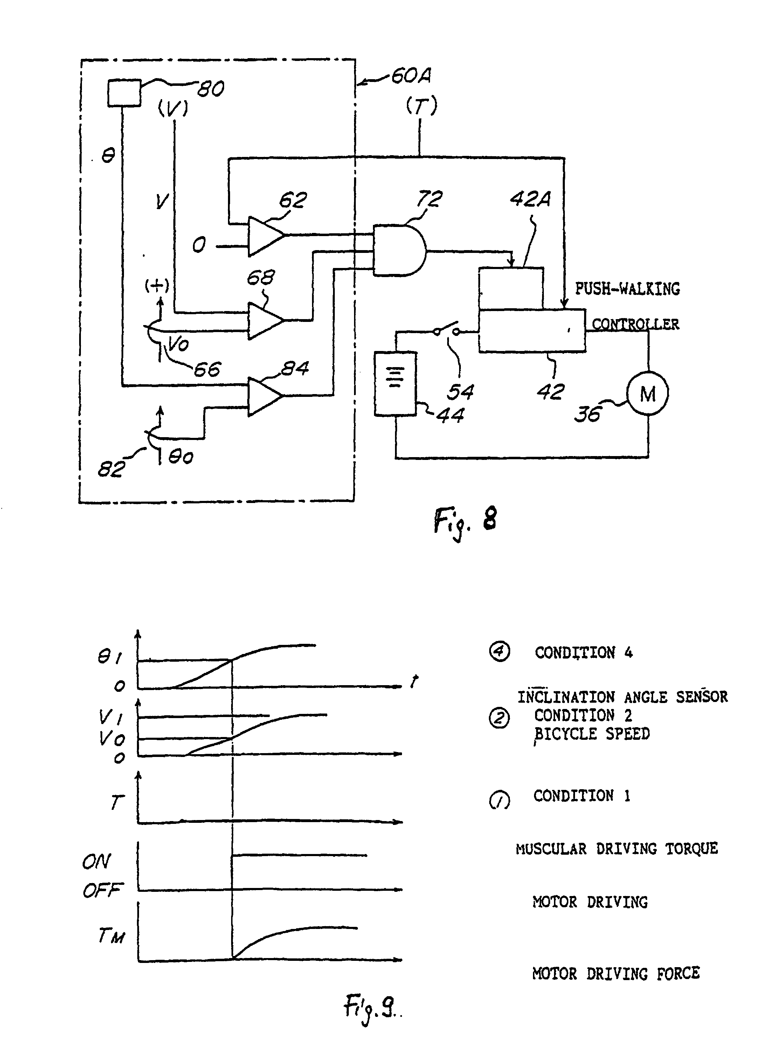

Another embodiment of the present invention intended to facilitate an advancing push-walking movement of a bicycle is explained referring to Figures 6-9, wherein Figures 8 and 9 disclose another embodiment for the same purpose.

In as far as the same components of the bicycle are described hereinafter, same reference numerals are being used and in view of the detailed description of said components, reference is made to the above explanation of the embodiment of Figure 1. Therefore, said functional explanations are not deemed to be necessary again and, therefore, are here omitted. Rather, the following description is focussed on the particularities of said embodiments of the push-walking assisting system.

In this case (Figure 6), the bicycle comprises a push-walking judging means 60 for judging the push-walking state, that is, the state of walking along pushing the bicycle by hand. This means 60 judges that the bicycle is in the push-walking state when following three conditions are satisfied:
① The muscular driving torque T is zero;
② The bicycle speed V is higher than a definite speed Vₒ in the forward direction; and
3o The grip of the handle bar 48 is gripped.

The condition ① is judged by comparing the driving torque T with 0 by a comparator 62.

The condition ② is judged by comparing the forward bicyle speed V detected by a speed sensor 64 (Fig.6) installed on the front wheel 50 (or by a speed sensor installed on the rear wheel 14) with a definite speed Vₒ (desirably about 1∼2 km/h) set by a setter 66 by a comparator 68.

The condition ③ is judged by a grip switch 70 installed at least on one of the grips of the handle bar 48.

When these conditions are satisfied, the related comparators or the switch outputs ON signals respectively, and, when three ON signals are all present, the AND circuit 72 judges that the bicycle is in the push-walking state and outputs an ON signal.

In addition, this embodiment is provided with a cancelling switch 74 which, even while in the push-walking state, cancels this state when the bicycle is braked, and the normally closed contact 74A connected between the electric power source and the input terminal of the AND circuit 72 is opened/closed by this switch 74. That is, this switch 74 opens the normally closed contact 74A when the bicycle is braked and turns the signal to be sent to the AND circuit 72 off. By this off signal, the AND circuit 72 turns the output signal showing the push-walking state off regardless of other conditions ①, ② and ③.

The output signal of this AND circuit 72 is inputted to the controller 42A for push-walking. This controller 42A controls the bicycle speed to a value V₁ (about 2∼3 km/h) which is a little slower than the ordinary walking speed. For example, it controls the motor current to control the motor driving force T_{M} using the signal outputted by the speed sensor 64 to represent the bicycle speed V so that the bicycle speed V may cone to this definite value V₁.

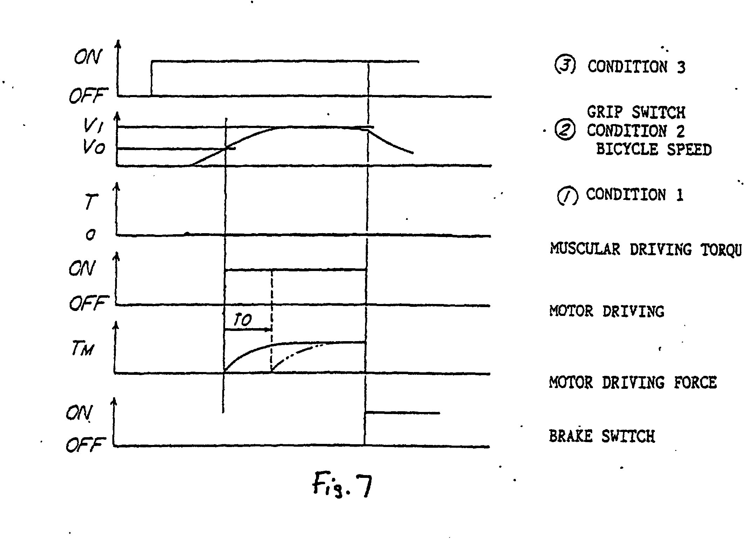

Consequently, while three conditions ①, ② and ③ are all satisfied and the bicycle is not braked, the controller 42A makes the bicycle run by itself with its speed V kept at a definite value V₁. If any one of these conditions ①, ② and ③ is not satisfied or if the bicycle is braked, the motor operated driving is turned off and the bicycle speed V drops (See Fig.7).

The push-walking judging means 60 for this invention can be of various types. For example, the embodiment shown in Fig.6 may be provided with a timer 68A for retarding the

ON signal of the comparator 68 so that the condition ② may be satisfied a definite time to later after the speed V came to the definite value Vₒ. The imaginary line in Fig.2 shows the action for this case.

Further, another structure may be employed in which a switch 76 or 76A is installed on the handle bar 48 or on the saddle 18 or the like to be manually operated when going up a slope pushing the bicycle by hand, so that the push-walking controller 42A may be actuated to keep the bicycle speed at a definite value V₁ only while the switch 76 or 76A is closed.

Fig.8 is a conceptional illustration of another embodiment and Fig.9 is its function describing diagram.

In this embodiment, a condition ④ of bicycle inclination angle θ detection is employed instead of the condition ③ of the grip switch 70. That is, an inclination angle sensor 80 is provided on the bicycle, and it is judged that the bicycle is going up a slope when the detected inclination angle θ is larger than a definite value θₒ. In Fig.4, the numeral 82 denotes a setter for the inclination θₒ, and 84 denotes a comparator. Since other members are the same as those in Fig.6, their descriptions are not repeated. Of course, a normally closed contact 74A (Fig.6) which is opened by the brake may be provided.

Although the controller 42A in the embodiments above controls the bicycle speed V to a definite value V₁, it may be constructed to control the motor voltage to a definite low value to drive the motor at a low speed, or it may be a control system of other type.

The motor 36 employed in this invention may be other than the permanent magnet type DC motor above, and may be, for example, a series-wound DC motor or the like. As the controller 42, a chopper type one can be employed which changes the time ratio (duty ratio) of the ON and OFF of the DC voltage according to the torque T. In Fig.6, the numeral 54 denotes a main key switch connected between the battery 44 and the controller 42.

## Claims

1. Muscle-operated vehicle, especially bicycle, having a muscle-operated driving system (26,28,30,32,34), an auxiliary electrical power driving system (36) and a control means (42;42A) for controlling the output of the electrical power driving system (36), **characterized in that** a push-walking detecting means (60;76;76A;60A;80) is provided for detecting the condition of operating the vehicle by walking, pushing said vehicle in forward direction, especially bicycle, by hand, triggering the control means (42A;42) to control the electrical power driving system (36) to a certain push-walking speed.

2. Muscle-operated vehicle as claimed in claim 1, **characterized in that** the push-walking detecting means (60) comprises a driving torque comparator (62), a vehicle speed comparator (68), a grip switch (70) and an AND circuit (72) to activate the push-walking control means (42A,42) of the motor circuit to energize the electrical power driving system (36) in response to a control means activating output of the AND circuit (72).

3. Muscle-operated vehicle as claimed in claim 1 or 2, **characterized in that** a push-walking condition cancelling switch (74) is provided, operated in response to a braking condition of the vehicle being detected.

4. Muscle-operated vehicle as claimed in at least one of the preceding claims 1 to 3, **characterized in that** the push-walking detecting means comprises a manually operated switch (76,76A).

5. Muscle-operated vehicle as claimed in at least one of the preceding claims 1 to 4, **characterized in that** the push-walking detecting means comprises a timer (68A) in order to retard a push-walking operation of the electrical power driving system (36).

6. Muscle-operated vehicle according to at least one of the preceding claims 2 to 5, **characterized in that** said AND circuit (72) outputs a triggering signal when the muscular driving torque (T) is zero, a detected vehicle speed (V) is higher than a predeterminable definite speed (V₀) and when at least one handle bar (48) is gripped.

7. Muscle-operated vehicle according to claim 1 or 3, **characterized in that** the push-walking detecting means (60A) comprises a driving torque comparator (62), a vehicle speed comparator (68), an inclination angle sensor (80) and an AND circuit (72) to activate the push-walking control means (42A) of the motor circuit to energize the electrical power drive system (36) in response to the control means activating output of the AND circuit (72).

8. Muscle-operated vehicle according to claim 7, **characterized in that** said AND circuit (72) outputs a triggering signal when the muscular driving torque (T) is zero, a detected vehicle speed (V) is higher than a predetermined definite speed (V₀) and when the detected inclination angle (θ) is higher than a predeterminable definite angle (θ₀).

9. Muscle-operated vehicle according to claim 8, **characterized in that** said definite angle (θ₀) is setable by an inclination angle setter (82) connected to a comparator (84) together with said inclination angle sensor (80).

10. Muscle-operated vehicle according to claims 6, 8 or 9, **characterized in that** said definite speed (V₀) is setable by a setter (66) connected to said vehicle speed comparator (68).

11. Muscle-operated vehicle according to at least one of the preceding claims 1 to 10, **characterized in that** the muscle-operated driving system and the electrical power system are provided in parallel to each other operating a driving shaft (26) of a rear wheel drive of a bicycle via one-way clutches (30,38) respectively.

## Patentansprüche

1. Muskelkraftbetätigtes Fahrzeug, insbesondere ein Fahrrad, das ein muskelkraftbetätigtes Antriebssystem (26, 28, 30, 32, 34), ein elektrisches Hilfsenergie- Antriebssystem (36) und eine Steuereinrichtung (42; 42A) zum Steuern der Ausgangsleistung des elektrischen Energie- Antriebssystems (36) hat, **dadurch gekennzeichnet, dass** eine Schiebe- Lauf- Erfassungseinrichtung (60; 76; 76A; 60A; 80) vorgesehen ist, um den Zustand des Betriebes des Fahrzeuges durch Laufen festzustellen, in dem Fahrzeug, insbesondere Fahrrad, von Hand in Vorwärtsrichtung geschoben, die Steuereinrichtung (42A; 42) auslösend, um das elektrische Energie- Antriebssystem (36) auf eine bestimmte Schiebe- Laufgeschwindigkeit zu steuern.

2. Muskelkraftbetätigtes Fahrzeug nach Anspruch 1, **dadurch gekennzeichnet, dass** die Schiebe- Lauf- Erfassungseinrichtung (60) aufweist einen Antriebs-Drehmomentvergleicher (62), einen Fahrzeuggeschwindigkeits- Vergleicher (68), einen Griffschalter (70) und einen UND- Schaltkreis (72), um die Schiebe- Lauf-Steuereinrichtung (42A; 42) des Motorschaltkreises zu aktivieren, um das elektrische Energie- Antriebssystem (36) in Abhängigkeit von einem die Steuereinrichtung aktivierenden Ausgangsleistung des UND- Schaltkreises (72) mit Energie zu versorgen.

3. Muskelkraftbetätigtes Fahrzeug nach Anspruch 1 oder 2, **dadurch gekennzeichnet, dass** ein Schiebe- Lauf- Zustand- Aufhebungsschalter (74) vorgesehen ist, betätigt in Abhängigkeit davon, dass ein Bremszustand des Fahrzeuges erfasst wird.

4. Muskelkraftbetätigtes Fahrzeug nach zumindest einem der vorhergehenden Ansprüche 1 bis 3, **dadurch gekennzeichnet, dass** die Schiebe- Lauf- Erfassungseinrichtung einen manuell betätigten Schalter (76, 76A) aufweist.

5. Muskelkraftbetätigtes Fahrzeug nach zumindest einem der vorhergehenden Ansprüche 1 bis 4, **dadurch gekennzeichnet, dass** die Schiebe- Lauf- Erfassungseinrichtung einen Zeitgeber (68A) aufweist, um eine Schiebe- Lauf- Betriebsweise des elektrischen Energie- Antriebssystems (36) zu verzögern.

6. Muskelkraftbetätigtes Fahrzeug nach zumindest einem der vorhergehenden Ansprüche 2 bis 5, **dadurch gekennzeichnet, dass** der UND- Schaltkreis (72) ein Auslösesignal ausgibt, wenn das Muskelkraft- Antriebsdrehmoment (T) Null ist, eine erfasste Fahrzeuggeschwindigkeit (V) höher als eine vorbestimmbare, definierte Geschwindigkeit (V₀) ist, und wenn zumindest ein Handgriff (48) ergriffen ist.

7. Muskelkraftbetätigtes Fahrzeug nach Anspruch 1 oder 3, **dadurch gekennzeichnet, dass** die Schiebe- Lauf- Erfassungseinrichtung (60A) einen Antriebsdrehmoment- Vergleicher (62), einen Fahrzeuggeschwindigkeits- Vergleicher (68), einen Neigungswinkelsensor (80) und einen UND- Schaltkreis (72) aufweist, um die Schiebe- Lauf- Steuereinrichtung (42A) des Motorschaltkreises zu aktivieren, um das elektrische Energie- Antriebssystem (36) in Abhängigkeit von einem die Steuereinrichtung aktivierenden Ausgangssignal des UND- Schaltkreises (72) mit Energie zu versorgen.

8. Muskelkraftbetätigtes Fahrzeug nach Anspruch 7, **dadurch gekennzeichnet, dass** der UND- Schaltkreis (72) ein Auslösesignal ausgibt, wenn das Muskelkraft-Antriebsdrehmoment (T) Null ist, eine erfasste Fahrzeuggeschwindigkeit (V) höher als eine vorbestimmte, festgelegte Geschwindigkeit (V₀) ist, und wenn der erfasste Neigungswinkel (θ) höher als ein vorbestimmbarer, definierter Winkel (θ₀) ist.

9. Muskelkraftbetätigtes Fahrzeug nach Anspruch 8, **dadurch gekennzeichnet, dass** der definierte Winkel (θ₀) durch einen Neigungswinkeleinsteller (82), verbunden mit einem Vergleicher (84), zusammen mit dem Neigungswinkelsensor (80) festlegbar ist.

10. Muskelkraftbetätigtes Fahrzeug nach den Ansprüchen 6, 8 oder 9, **dadurch gekennzeichnet, dass** die festgelegte Geschwindigkeit (V₀) durch einen mit dem Fahrzeug- Geschwindigkeitsvergleicher (68) verbundenen Einsteller (66) festlegbar ist.

11. Muskelkraftbetätigtes Fahrzeug nach zumindest einem der vorhergehenden-Ansprüche 1 bis 10, **dadurch gekennzeichnet, dass** das muskelkraftbetätigte Antriebssystem und das elektrische Energie- Antriebssystem parallel zueinander vorgesehen sind, die jeweils eine Antriebswelle (26) eines Hinterradantriebes eines Fahrrades mittels Freilaufkupplungen (30, 38) betätigbar.

## Revendications

1. Véhicule propulsé par la force musculaire, spécialement bicyclette, ayant un système d'entraînement propulsé par la force musculaire (26, 28, 30, 32, 34), un système d'entraînement par énergie électrique auxiliaire (36) et un moyen de commande (42 ; 42A) pour commander la puissance du système d'entraînement par énerqie électrique (36), **caractérisé en ce que** des moyens de détection de marche - poussée (60, 76 ; 76A ; 60A ; 80) sont prévus pour détecter la condition d'actionnement du véhicule en marchant, en poussant ledit véhicule dans le sens avant, spécialement une bicyclette, à la main, en déclenchant les moyens de commande (42A ; 42) pour commander le système d'entraînement par énergie électrique (36) à une certaine vitesse de marche - poussée.

2. Véhicule propulsé par la force musculaire selon la revendication 1, **caractérisé en ce que** les moyens de détection de marche - poussée (60) comprennent un comparateur de couple d'entraînement (62), un comparateur de vitesse de véhicule (68), un commutateur de prise (70) et un circuit ET (72) pour activer les moyens de commande de marche - poussée (42A, 42) du circuit de moteur pour exciter le système d'entraînement par énergie électrique (36) en réponse à un moyen de commande qui active la puissance du circuit ET (72).

3. Véhicule propulsé par la force musculaire selon la revendication 1 ou 2, **caractérisé en ce qu'**un commutateur d'annulation de la condition de marche - poussée (74) est prévu, actionné en réponse à une condition de freinage du véhicule qui est détectée.

4. Véhicule propulsé par la force musculaire selon l'une des revendication précédentes 1 à 3, **caractérisé en ce que** les moyens de détection de marche - poussée comprennent un commutateur actionné manuellement (76, 76A).

5. Véhicule propulsé par la force musculaire selon au moins l'une des revendications précédentes 1 à 4, **caractérisé en ce que** les moyens de détection de marche - poussée comprennent une minuterie (68A) afin de retarder un fonctionnement de marche - poussée du système d'entraînement par énergie électrique (36).

6. Véhicule propulsé par la force musculaire selon au moins l'une des revendications précédentes 2 à 5, **caractérisé en ce que** ledit circuit ET (72) émet un signal de déclenchement lorsque le couple d'entraînement musculaire (T) est nul, une vitesse de véhicule détectée (V) est plus élevée qu'une vitesse bien définie pouvant être prédéterminée (Vₒ) et lorsque au moins un guidon (48) est saisi.

7. Véhicule propulsé par la force musculaire selon la revendication 1 ou 3, **caractérisé en ce que** les moyens de détection de marche - poussée (60A) comprennent un comparateur de couple d'entraînement (62), un comparateur de vitesse de véhicule (68), un détecteur d'angle d'inclinaison (80) et un circuit ET (72) pour activer les moyens de commande de marche - poussée (42A) du circuit de moteur pour exciter le système d'entraînement par énergie électrique (36) en réponse aux moyens de commande qui activent la puissance du circuit ET (72).

8. Véhicule propulsé par la force musculaire selon la revendication 7, **caractérisé en ce que** ledit circuit ET (72) émet un signal de déclenchement lorsque le couple d'entraînement musculaire (T) est nul, une vitesse de véhicule détectée (V) est plus élevée qu'une vitesse bien définie prédéterminée (V₀) et lorsque l'angle d'inclinaison détecté (θ) est plus grand qu'un angle bien défini pouvant être prédéterminé.

9. Véhicule propulsé par la force musculaire selon la revendication 8, **caractérisé en ce que** ledit angle bien défini (θ₀) peut être établi par un dispositif d'établissement d'angle d'inclinaison (82) relié à un comparateur (84) conjointement avec ledit détecteur d'angle d'inclinaison (80).

10. Véhicule propulsé par la force musculaire selon les revendications 6, 8 ou 9, **caractérisé en ce que** ladite vitesse bien définie (V₀) peut être établie par un dispositif d'établissement (66) relié audit comparateur de vitesse de véhicule (68).

11. Véhicule propulsé par la force musculaire selon l'une au moins des revendications précédentes 1 à 10, **caractérisé en ce que** le système d'entraînement propulsé par la force musculaire et le système d'entraînement par énergie électrique sont prévus parallèlement l'un à l'autre en actionnant un axe d'entraînement (26) d'un entraînement de roue arrière d'une bicyclette par l'intermédiaire d'embrayages unidirectionnels (30, 38) respectivement.
